# EUROPEAN PATENT APPLICATION

(11) **EP 3 389 248 A2**
(43) Date of publication of application: **17.10.2018**
(21) Application number: 18166555.5
(22) Date of filing: 10.04.2018
(51) Int. Cl.: H04M 1/60, H04R 1/10

(54) **METHOD AND APPARATUS FOR EASY SWITCHING BETWEEN WIRED AND WIRELESS HEADSET WITH CONVENIENT CHARGING**

(30) Priority: 12.04.2017 US 201715485960
(71) Applicant: Private Giant, Orlando, Florida 32828 (US)
(72) Inventor: JOHNSON, Richard, Orlando, FL 32828 (US); MURPHY, Shaun, Orlando, FL 32828 (US); MURPHY, Charles, Orlando, FL 32828 (US)
(74) Representative: D Young & Co LLP

(57) **Abstract**

An apparatus for easy switching between wired and wireless modes of a headset with convenient charging. The apparatus may include a headset configured with a port that allows for electrically and communicatively connecting to a mobile device via a wire plugged into the port. A processor configured within the headset of the apparatus may receive a signal indicating the headset being connected to the mobile device through the wire. In response to receiving the signal indicating the wire connection, the apparatus may turn off a Bluetooth signal transmitted by the apparatus. The apparatus also charge a battery in the apparatus using power received through an electrical connection of the wire, and establish audio communication with the mobile device through a communication connection of the wire. Embodiments also include a wire with swappable portions to facilitate the transfer of power and data.

## Description

### Field

This disclosure is generally related to headset technology. More specifically, this disclosure is related to a method and apparatus for switching a headset between wired and wireless modes with convenient charging.

### Background

Bluetooth headphones allow users to enjoy hands-free communication with other people. These Bluetooth headphones need to be recharged often. In some instances, a user may need to recharge their Bluetooth headphones daily. Unfortunately, the user may often forget to bring a charger along when traveling or the user may simply be away for a while from a location where the user may recharge the Bluetooth headphone. Under these circumstances, the user may not be able to use their Bluetooth headphone.

### Summary

One embodiment of the present invention may include an apparatus for easy switching between wired and wireless modes of a headset. The apparatus may include, but is not limited to, a headset configured with a port that allows for electrically and communicatively connecting to a mobile device via a wire plugged into the port. A processor configured within the headset of the apparatus may receive a signal indicating the headset being connected to the mobile device through the wire. In response to receiving the signal indicating the wire connection, the apparatus may turn off a Bluetooth signal transmitted by the apparatus. The apparatus may also charge a battery in the apparatus using power received through an electrical connection of the wire, and establish audio communication with the mobile device through a communication connection of the wire.

In some embodiments, the processor automatically turns on a Bluetooth signal and establishes a Bluetooth connection with the mobile device upon receiving a signal indicating that the wire connecting the apparatus with the mobile device is no longer connected.

In some embodiments, the processor controls the apparatus to produce an audible audio signal in response to receiving a signal indicating that a connection status of the apparatus with the mobile device through the wire changes.

In some embodiments, the apparatus configures the contacts of the wire connection to set one or more electrical contacts and audio contacts for communication.

In some embodiments, the processor receives a signal indicating the audio communication has been successfully configured before turning off the Bluetooth signal.

In some embodiments, the processor automatically controls the apparatus to power up in response to receiving a signal indicating a new connection to the mobile device is established through the wire.

In some embodiments, the processor receives a signal and determines that a new connection to a new mobile device is established, and in response automatically establishes a new Bluetooth connection to the new mobile device when receiving a signal indicating that the wire connecting the apparatus with the new mobile device is disconnected.

In some embodiments, the apparatus may display a message requesting whether a user wants to switch to a wire connection mode before turning off the Bluetooth signal and receives a user response through user interaction with the apparatus.

In some embodiments, the apparatus displays on a display panel a visual indicator indicating that the apparatus is switching from a wireless connection to a wire connection.

Another embodiment of the present invention may include a method for easy switching between wired and wireless modes of a headset. The method may be performed by a system. The method may include, but is not limited to, configuring a headset with a port that allows for electrically and communicatively connecting to a mobile device via a wire plugged into the port. The method may also include configuring the headset to detect the headset being connected to the mobile device through the wire. The method may also include, in response to the detecting, turn off a Bluetooth signal transmitted by the apparatus, charge a battery in the apparatus using power received through an electrical connection of the wire, and establish audio communication with the mobile device through a communication connection of the wire.

In some embodiments, the method may also include configuring the headset to automatically turn on the Bluetooth signal and establish a Bluetooth connection with the mobile device upon detecting that the wire connecting the headset with the mobile device is no longer connected.

In some embodiments, the method may also include configuring the headset to produce an audible audio signal in response to detecting that a connection status of the headset with the mobile device through the wire changes.

In some embodiments, the method may also include configuring the headset to set up one or more contacts of the wire connection to establish one or more electrical contacts and audio contacts for communication.

In some embodiments, the method may also include configuring the headset to detect that the audio communication has been successfully configured before turning off the Bluetooth signal.

In some embodiments, the method may also include configuring the headset to power up in response to receiving a signal indicating a new connection to the mobile device is established through the wire.

In some embodiments, the method may also include configuring the headset to detect that a new connection to a new mobile device is established, and in response automatically establish a new Bluetooth connection to the new mobile device when detecting that the wire connecting the headset with the new mobile device is disconnected.

In some embodiments, the method may also include configuring the headset to display a message requesting whether a user wants to switch to a wire connection mode before turning off the Bluetooth signal and receive a user response through user interaction with the headset.

In some embodiments, the method may also include configuring the headset to display on the display panel a visual indicator indicating that the headset is switching from a wireless connection to a wire connection.

Another embodiment of the present invention may include a system for configuring a headset for easy switching between wired and wireless modes of the headset. During operation, the system may configure a headset with a port that allows for electrically and communicatively connecting to a mobile device via a wire plugged into the port. The system may configure the headset to detect the headset being connected to the mobile device through the wire. The system may also configure the headset to, in response to the detecting, turn off a Bluetooth signal transmitted by the apparatus. The system may also configure the headset to charge a battery in the apparatus using power received through an electrical connection of the wire, and establish audio communication with the mobile device through a communication connection of the wire.

In some embodiments, the system may configure the headset to automatically turn on the Bluetooth signal and establish a Bluetooth connection with the mobile device upon detecting that the wire connecting the headset with the mobile device is no longer connected.

In some embodiments, the apparatus is adapted to receive a connector of a wire that is comprised of swappable portions, wherein the wire facilitates the transfer of power and data.

Another embodiment of the present invention may include a wire apparatus. The wire apparatus may include a first end portion of a wire connected at one end of the first end portion via an intermediate connector to a second middle portion of the wire, wherein the first end portion includes a connector at the other end which is pluggable into another device. The second middle portion of the wire may be connected via a second intermediate connector to a device end portion of the wire, with the second middle portion including an integrated circuit or microcontroller to facilitate the transfer of power and data from the first end portion of the wire to the device end portion of the wire. The device end portion of the wire may include a connector that is pluggable into a device, the wire providing at least a connection to transfer power and providing at least a connection to transfer data from the phone to the device.

Another embodiment of the present invention may include a method for configuring a wire apparatus. During operation, a wire configuration system may configure a wire with a first end portion of a wire connected at one end of the first end portion via an intermediate connector to a second middle portion of the wire, wherein the first end portion includes a connector at the other end which is pluggable into another device. The system may also configure the second middle portion of the wire to be connected via a second intermediate connector to the device end portion of the wire, with the second middle portion including an integrated circuit or microcontroller to facilitate the transfer of power and data from the first end portion of the wire to a device end portion of the wire. The system may also configure the device end portion of the wire to include a connector that is pluggable into a device, the wire providing at least a connection to transfer power and providing at least a connection to transfer data from the phone to the device.

### Brief Description of the Drawings

FIG. 1 illustrates a schematic diagram illustrating an exemplary easy switching headset in wire connection mode in accordance with an embodiment.
FIG. 2 illustrates a schematic diagram illustrating an exemplary easy switching headset in wireless connection mode in accordance with an embodiment.
FIG. 3 illustrates a schematic diagram illustrating exemplary components of a headset in accordance with an embodiment.
FIG. 4 illustrates a schematic diagram illustrating an exemplary easy switching headset embodied as a pair of earbuds in wire connection mode in accordance with an embodiment.
FIG. 5 illustrates a schematic diagram illustrating an exemplary easy switching headset embodied as a pair of earbuds in wireless connection mode in accordance with an embodiment.
FIG. 6 illustrates a schematic diagram illustrating an exemplary wire, in accordance with an embodiment.
FIG. 7 presents a flowchart illustrating an exemplary process for switching from wireless connection mode to wire connection mode in accordance with an embodiment.
FIG. 8 presents a flowchart illustrating an exemplary process for switching from wire connection mode to wireless connection mode in accordance with an embodiment.

### Detailed Description

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention solve the problem of improving headsets by providing a easy and automatic way of switching between wired and wireless modes of a headset with convenient charging. With embodiments of the present invention, users may charge their headset while enjoying audio and/or conversing through a wire connection. When the headset is sufficiently charged, the user may simply remove the headset from the wire connection and use a Bluetooth wireless connection to continue their conversation or listen to music. The user need not wait for the headset to fully charge before switching the mode of the headset. Bluetooth is a wireless technology standard for exchanging data over short distances between mobile and other computing devices.

The headset may automatically switch from a wireless connection mode to a wire connection mode or from the wire connection mode to the wireless connection mode. For example, the headset may detect that the headset is connected to a power source that also provides communication data such as a mobile phone, and automatically shut off the Bluetooth signal, establish audio communication with the mobile phone, and charge the phone battery.

Existing systems do not allow a user to both 1) use their headset while charging their headset with power provided by a mobile device, and to 2) simply unplug the headset from the wire to use the headset wirelessly. Existing systems are typically either wireless only or the headset has a permanently connected wire that must be plugged into an audio jack or other input of the mobile device.

### Improvements Over Existing Systems

The disclosed invention represents an improvement over existing headset technology since current headsets are either wired only or wireless only. For example, mobile phone owners cannot use existing wireless Bluetooth headphones to communicate with a computing device (e.g., a mobile phone) over a wire. These existing wireless Bluetooth headphones can only communicate with a mobile device over Bluetooth, and cannot communicate with a mobile device using a wire. Charging these types of headphones is inconvenient since the user might not have a charging adapter with wire.

Similarly, mobile phone owners that purchase wired headphones cannot remove the wires that are manufactured as part of the headphones. The mobile phone owners cannot remove the wires and communicate with the phone over a wireless connection. The mobile phone owners can only use the headphone with wires to communicate with the mobile device.

### Wire Connection Mode

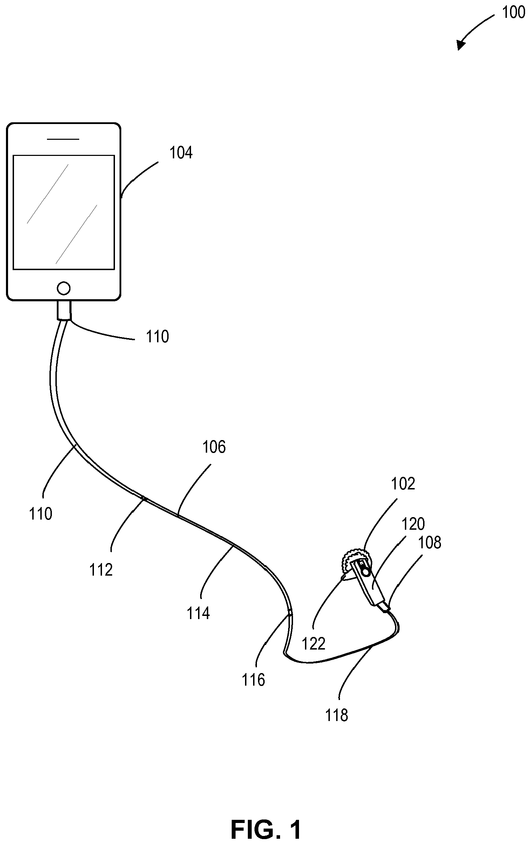

FIG. 1 illustrates a schematic diagram 100 illustrating an exemplary easy switching headset 102 in wire connection mode in accordance with an embodiment. As depicted in FIG. 1, headset 102 is electrically coupled and communicatively coupled with a mobile device 104 via a wire 106. Wire 106 may include a connector 108 that is plugged into headset 102, and a connector 110 that is plugged into mobile device 104. The wire (or cable) may serve as a transmission medium for transferring electricity between the headset and the mobile device and charging the battery in the headset. The wire may also serve as a transmission medium for transferring communication data between the headset and the mobile device. The wire can also be used to charge other devices such as another phone, flashlights, mobile WiFi hotspot devices, portable speakers, etc. A user may use headset 102 to enjoy audio entertainment or to participate in a conversation through mobile device 104.

In some embodiments, the wire includes swappable wire portions. The two end portions of the wire may be swappable. For example, an end portion of the wire 110 connected to a phone (e.g., mobile device 104) can include any type of connector (e.g., interface), such as APPLE LIGHTNING, USB Type-C, micro USB, or any type of future data+power connector. The connector is pluggable, meaning that the connector may be plugged into a device such as mobile device 104. End portion of the wire 110 may be called the phone end. End portion of the wire 110 may be connected via an intermediate connector 112 to the next portion of the wire, which is a middle portion 114 with an integrated circuit.

The middle integrated circuit portion is universal. The integrated circuit may adapt data and power to a common format. In some embodiments, the middle portion may include a microcontroller for controlling any one of a regulator and a booster. The booster may increase the input voltage to a higher output voltage (for example, as needed for a headset). The regulator may decrease the output voltage (for example, as needed for a headset). The microcontroller may also contain programmed instructions to ensure that the data input and output is mapped correctly.

The middle portion 114 may be connected to an intermediate connector 116 that connects to another end of the wire, called the device end portion 118, which is connected to a Bluetooth headset. The device end exposes power and data (could be audio) to micro USB, USB Type-C, APPLE LIGHTNING, or other types of power+data connectors (e.g., female connectors). The portions of the wire may be detachable (e.g., swappable and removable). Users may swap out one portion of the wire with one type of connector for another wire portion with another type of connector. Note that the lengths and cross-section diameter of the portions of the wire depicted in the figures are examples only and embodiments of the present invention may include different lengths and different cross-section diameters for the portions of the wire.

In one example, the device end may be connected to a dual-mode device as disclosed herein, which may be a Bluetooth/wired audio device. A first mode of the dual-mode device consumes audio and power from the universal part of the wire to charge a built-in battery and uses the audio signal from the wire to drive the earphones. A second mode of the dual-mode device uses a wireless audio connection (e.g., according to Bluetooth protocol) and in some embodiments may consume power when plugged in. This dual-mode device may be headset 102 as described below.

Headset 102 can come in different form factors associated with different shapes and sizes. Headset 102 may be any type of headset, including but not limited to, an in-ear Bluetooth headset with microphone, a headphone, a single earbud, a pair of earbuds or any other type of headset or earphone with or without microphone.

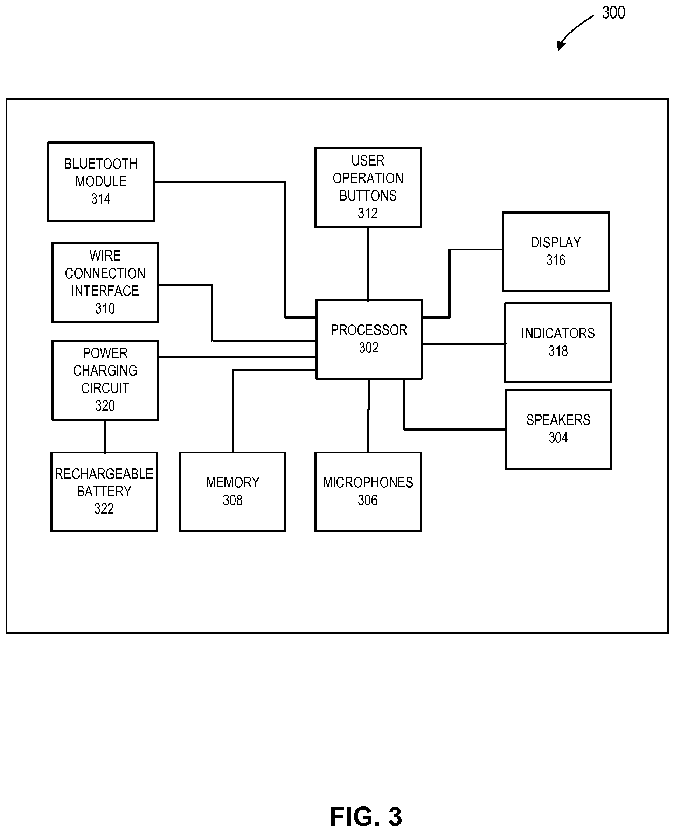

For example, headset 102 can be an in-ear Bluetooth headset with microphone as depicted in FIG. 1. In one embodiment, the headset may include, but is not limited to, a housing 120 and an earbud member 122 extending from the housing. The earbud member may be attached to or integrally formed with the housing. The earbud member and the housing may include various components placed within or at the surface. For example, these components may include, but is not limited to, processors, a Bluetooth module, and/or a wire connection interface. These and other additional components are discussed further with respect to FIG. 3.

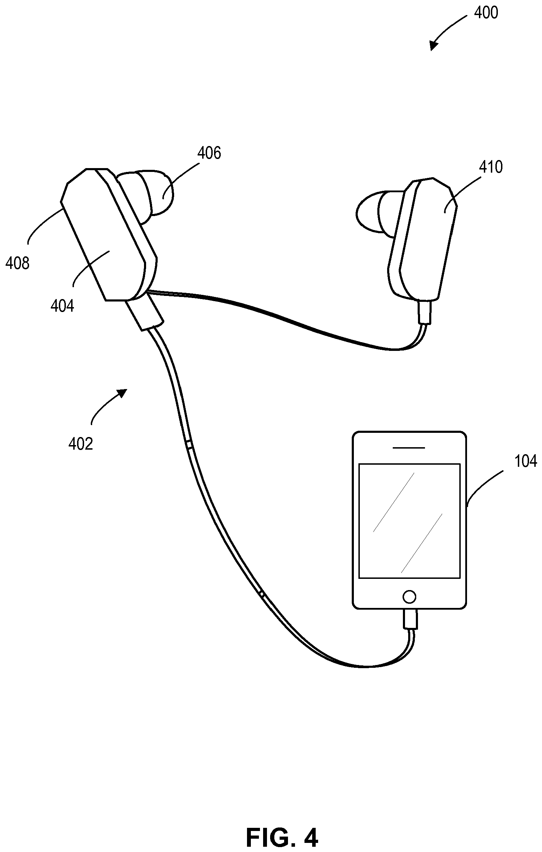

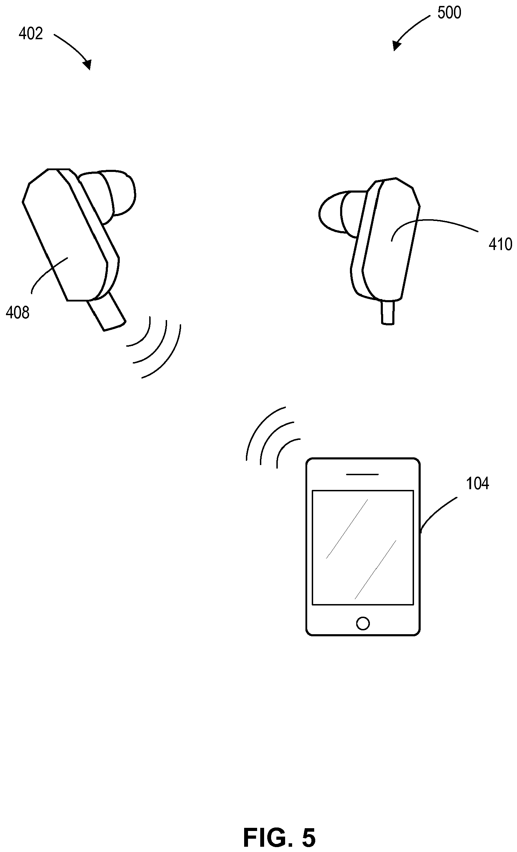

Headset 102 can also be a pair of headsets joined by a band placed over the head that allows the user to listen to music or speech or carry a phone conversation with an included microphone. As another example, the headset can be a pair of earbuds with one earbud placed at the user's left ear and the other earbud placed at the user's right ear, as depicted and described with respect to FIG. 4 and FIG. 5.

Although FIG. 1 depicts mobile device 104 as a smartphone, mobile device 104 can be also be a laptop computer or any other computing device that provides power and that user 108 can use for audio or visual entertainment or participate in conversations. Mobile device 104 may be a battery-powered portable communication device, a battery-powered mobile device, or any other type of device of capable of producing audio and providing power.

Furthermore, although the example embodiments described using the Bluetooth standard for communication between the mobile device and the headset, embodiments of the present invention are not limited to using the Bluetooth wireless standard to communicate between the headset and mobile devices. Different embodiments may use different wireless communication standards.

### Wireless Connection Mode

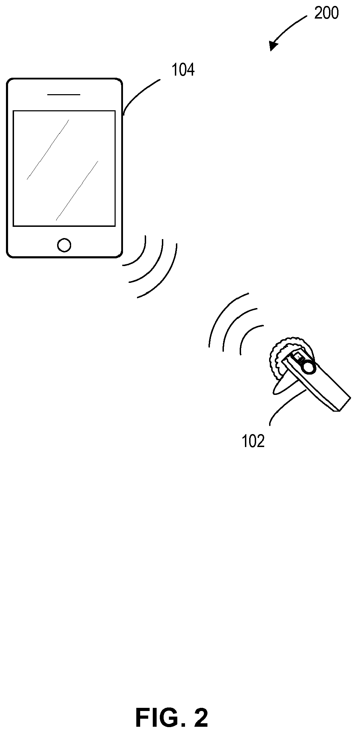

FIG. 2 illustrates a schematic diagram 200 illustrating exemplary easy switching headset 102 in wireless connection mode in accordance with an embodiment. Note that the drawing is not to scale. As depicted in FIG. 2, headset 102 is communicating with mobile device 104 via Bluetooth wireless signals. A user may use headset 102 to listen to and enjoy audio entertainment or to participate in a conversation through mobile device 104.

In some embodiments, mobile device 104 may be a different mobile device from that depicted in FIG. 1. For example, a user may have multiple mobile devices, and can be switching between a tablet and a cell phone. Headset 102 may automatically detect a new mobile device when in wire connection mode and automatically establish a Bluetooth connection with the new mobile device when the headset 102 is disconnected from the wire. Headset 102 may distinguish between different mobile devices by receiving a device identifier and/or address from each mobile device. In some mobiles, software on the mobile device can provide the device identifier and/or device address to headset 102 upon detecting a connection with headset 102.

When headset 102 is in wireless connection mode and a user uses a wire to connect headset 102 with a mobile device, headset 102 may automatically detect the apparatus being connected to the mobile device through the wire, and, in response to detecting the connection, turn off a Bluetooth signal of the apparatus. Headset 102 may also charge a battery in the apparatus through the electrical connection of the wire, and establish audio communication with the battery-powered communication device through the communication connection of the wire.

### Exemplary Diagram Of Headset Components

FIG. 3 illustrates a schematic diagram 300 illustrating exemplary components of a headset in accordance with an embodiment. FIG. 3 depicts a set of components in one embodiment, and embodiments of the present invention may include additional components or different components arranged and/or connected in different ways.

The housing and/or earbud of the headset can include one or more of any of the following components: a processor 302, speakers (including loudspeaker) 304, microphones 306, memory 308, a wire connection interface 310 (for example, such as an APPLE LIGHTNING interface or USB Type-C interface), user operation buttons 312, a Bluetooth module 314 (including transmitter/receiver with an antenna), display 316, indicators 318, a power charging circuit 320, a rechargeable battery 322, and other circuitry. The earbud member may include a speaker while the housing may include a microphone.

Processor 302 may control the functions of the headset. The processor may control the operations of the various components of the headset, and may be electrically coupled with other components through electrical connections including circuit boards and cables. For example, the processor may control a display and user input panel, responses to user operation buttons, storing and reading of data to and from memory, and the charging of a battery.

The processor may control communications. The processor may switch the headset from wireless connection with to wire connection mode, or from wire connection mode to wireless connection mode.

The processor may control wireless communications with a mobile device. For example, processor can generate signals for wireless transmission signals and process wireless signals that are received. The processor can also send and receive signals through the Bluetooth module. The processor can send a signal to Bluetooth module 314 to shut down or start up the Bluetooth signal. The processor may control the data that is sent over to another device via the Bluetooth signal and process the signals received via Bluetooth module 314.

The processor can process the wire signals received through the wire connection interface. The wire connection interface can detect if there is a connection and can send a signal indicating that there is a connection as well as the data received over the connection to the processor.

In some embodiments, a microcontroller can contain the processor and one or more components. The functions performed by the processor may also be performed by other modules or circuits in different embodiments.

The system may include speakers 304, including a loudspeaker, for audio output and/or one or more microphones 306 for audio input.

Memory 308 may store data, such as data received from the mobile device. The memory can be, but is not limited to, flash memory or erasable programmable read-only memory (EPROM).

Wire connection interface 310 may be, but is not limited to, an interface with an APPLE LIGHTNING port that accepts an APPLE LIGHTNING connector. LIGHTNING is a proprietary computer bus and power connector created by APPLE. The LIGHTNING connector connects Apple mobile devices to host computers and peripherals. The LIGHTNING connector uses 8 pins and can be inserted with either side facing up. APPLE'S power rating for the LIGHTNING cable is 5 Volts DC carrying 1.8 Amps of current, which is equal to 9 Watts of power.

Wire connection interface 310 may also be a USB interface. For example, wire connection interface 310 may be a USB Type-C connection interface. USB Type-C is a 24-pin, reversible-plug USB connector system that allows transport of data and energy. USB 3.1 Type-C devices may support power currents of 1.5 A and 3.0 A at 5 V.

User operation buttons 312 in various embodiments may perform different functions when operated by a user, such as increase or decrease volume, pause playback, or terminate calls.

Bluetooth module 314 may transmit and receive a wireless signal utilizing the Bluetooth protocol via the antenna.

In some embodiments, the headset may also include display 316 for displaying the state of the headset and other information. For example, the headset may display data on display 316 indicating whether the headset is in wire connection mode or wireless connection mode. The display may also include a touch panel for receiving user commands.

The headset may also include one or more indicators 318 to indicate the state of the headset, such as whether power is on, whether the battery is charging, or whether the battery is low on power. Some indicators may also indicate whether the headset is in wire connection load or wireless connection mode. For example, one indicator may light up when the headset is in wire connection mobile, and another indicator may light up when the headset is in wireless connection mode.

Power charging circuit 320 may recharge rechargeable battery 322. Processor 302 may control power charging circuit 320 to start and stop the recharging process. In some embodiments, when a USB Type-C interface is connected to an external device with a power source (e.g., a mobile device), power charging circuit 320 may receive a 5.0 voltage from the USB Type-C interface and recharge the rechargeable battery. In some embodiments, power charging circuitry 320 may automatically begin the charging process as soon as the headset is connected via a wire to an external device with a power source. without requiring any command from the processor, In some embodiments, when an APPLE LIGHTNING interface is connected to an external device with a power source (e.g., a mobile device), power charging circuit 320 may receive a 4.7 voltage from a APPLE LIGHTNING connector and recharge the rechargeable battery.

Note that different implementations may utilize various different voltages and currents. In some implementations, the rechargeable battery may provide a 3.3 voltage to the headset.

### Exemplary Headset - Pair Of Earbuds in Wire Connection Mode

FIG. 4 illustrates a schematic diagram 400 illustrating an exemplary easy switching headset embodied as a pair of earbuds in wire connection mode in accordance with an embodiment.

The headset may be a pair of earbuds. For example, headset 402 can be a pair of in-ear Bluetooth earbuds with microphones as depicted in FIG. 4. In one embodiment, the earbud of the headset may include, but is not limited to, a housing 404 and an earbud member 406 extending from the housing. The earbud member may be attached to or integrally formed with the housing. The earbud member and the housing may include various components placed within or at the surface. Note that the drawings are not to scale.

One or both of the earbuds may include, but is not limited to, multiple components illustrated in FIG. 3, such as processors, speakers, microphones, antennas, wire connection interfaces, one or more user operation buttons, a power charging circuit, displays, indicators, rechargeable batteries, and associated circuitry.

In some embodiments, a user may use the pair of earbuds while the earbuds' batteries are being charged. The earbuds may be electrically coupled to a mobile device that provides power for charging batteries of the earbuds. A wire connection interface of one earbud 408 may be connected to a wire such as a wire with a LIGHTNING connector or a wire with a USB Type-C connector.

The one earbud may optionally be connected to the other earbud 410 to charge the battery of the both earbuds simultaneously while the user is listening or talking with the mobile device. Some implementations may include both earbuds being attached to a connection box hardware that also receives a LIGHTNING connector/USB Type-C connector to charge both earbuds simultaneously while listening to music or conversing.

In some embodiments, a headset (e.g., any of the headsets disclosed herein) may include orientation detection circuitry to determine the orientation of a connector that is plugged into the headset (or hardware connected to the headset) to provide communication and power from an external device. The headset system may route data and power through circuitry to other components according to the orientation of the connector.

For example, with the APPLE LIGHTNING connector, the contacts on the connector that provide data are dynamically assigned, and the orientation detection circuitry and/or other circuitry of the headset may route data and/or power according to the dynamically assigned contacts.

In some embodiments, the headset may provide identification and accessory data to a mobile device that is connected via the wire connection interface or wireless connection interface. In some embodiments, the headset may authenticate itself and/or negotiate with the power source for the power that is required.

In some embodiments, the two earbuds of a pair of earbuds may each be separately connected through a charging wire to a piece of hardware. That is, each earbud is connected through a respective charging wire to the hardware. The hardware may have a port that receives a wire connector with a wire connected to a charging source and another port to provide charging power output to the two wires connected to the two earbuds. Each of the earbuds may be disconnected from their respective wires and used wirelessly.

Note that the features described with respect to the pair of earbuds may also be found in any of the other headset types disclosed in the instant specification. Generally, any of the features described with respect to any of the headset types disclosed herein can also be implemented in any of the other headset types.

### Exemplary Headset - Pair Of Earbuds in Wireless Connection Mode

FIG. 5 illustrates a schematic diagram 500 illustrating an exemplary easy switching headset 402 embodied as a pair of earbuds in wireless connection mode in accordance with an embodiment. Headset 402 may be a pair of earbuds as illustrated in FIG. 4. One or both of earbuds 408, 410 may include, but is not limited to, a Bluetooth module for connecting with the mobile device through a Bluetooth connection. The earbuds may communicate with each other through a wired or wireless connection such as Bluetooth, and one or both of the earbuds may communicate with mobile device 104.

### Exemplary Wire

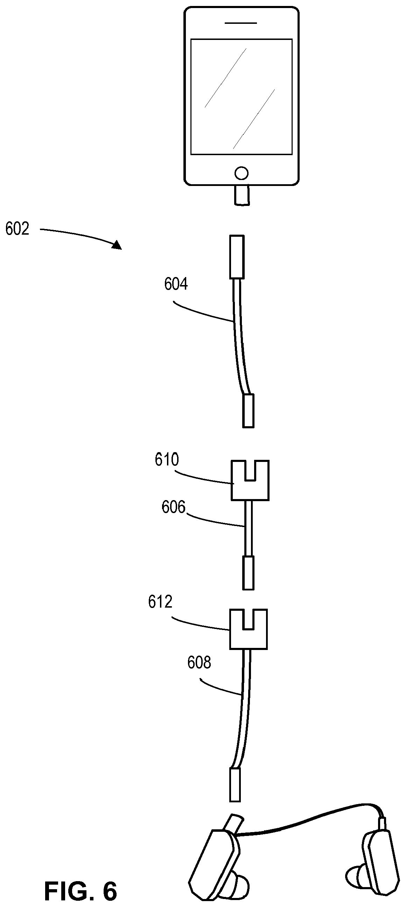

FIG. 6 illustrates a schematic diagram illustrating an exemplary wire 602, in accordance with an embodiment. As illustrated in FIG. 6, exemplary wire 602 may include an end portion of the wire 604 that includes a connector to connect to a phone or other device with a power source. Exemplary wire 602 may include a middle portion 606 with an integrated circuit that adapts data and power to a common format. Exemplary wire 602 may also include a device end portion 608 which includes a connector for connecting to devices such as headsets to provide power and data to a connected headset. The two end portions may be connected to the middle portion via intermediate connectors 610, 612.

### Switching From Wireless to Wire Connection Mode

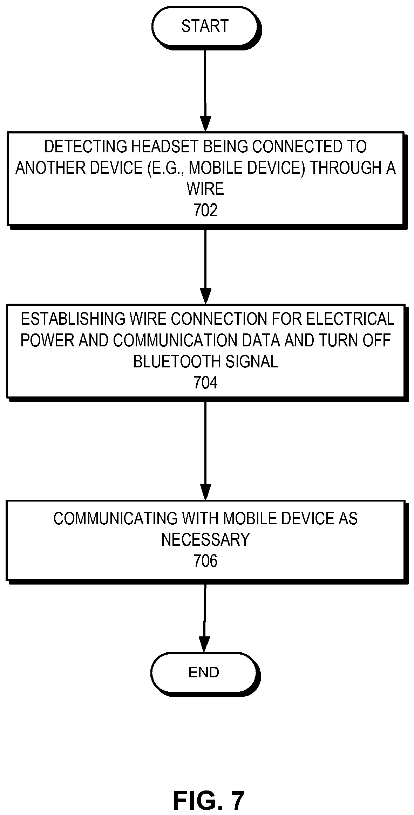

FIG. 7 presents a flowchart illustrating an exemplary process for switching from wireless connection mode to wire connection mode in accordance with an embodiment. The process illustrated in FIG. 7 is only one example of the operations that may be performed in an embodiment. Different components may perform the operations in different orders in various embodiments. The description below assumes that the headset is initially operating wirelessly.

As depicted in FIG. 7, the headset may detect the headset being connected to a mobile device through a wire (operation 702). The headset may be configured with a port that allows for electrically and communicatively connecting to another device, such as a mobile device, via a wire plugged into the port.

In some embodiments, the processor may receive a signal indicating the headset is connected to the mobile device through the wire. The processor in the headset may receive a signal from a wire connection interface that the headset is being connected to another device through the wire.

In response to receiving a signal indicating that the headset is connected to the mobile device, the processor may establish the wire connection for electrical power and communication data and turn off Bluetooth signal (operation 704). The processor may receive a signal (for example, from the wire connection interface) indicating the audio communication has been successfully configured before turning off the Bluetooth signal. The processor may control the Bluetooth module to turn off a Bluetooth signal transmitted by the apparatus.

The apparatus may charge a battery using power received through an electrical connection of the wire. In some embodiments, the processor may send a command to the charging circuit to charge the battery. The apparatus may establish audio communication with the mobile device through a communication connection of the wire. In some embodiments, the processor may send a command to the wire connection interface or another component to establish the audio connection.

The headset may communicate with the mobile device as necessary (operation 706). For example, while establishing audio communication and/or setting up the power transfer, the headset may send accessory information and/or identification information to the mobile device. This may include Bluetooth address information. The headset may send the information in response to a request from the mobile device.

For example, with the LIGHTNING interface, the headset may receive a command from the mobile device requesting configuration data. In response receiving the command, the headset may send configuration information for the LIGHTNING connector contacts to the mobile device. The headset may also send an identifier of the headset to the mobile device. The mobile device can then determine the orientation of the connector contacts and configure the contacts of the connector on the mobile device. The apparatus configures the contacts of the wire connection to set the electrical contacts and audio contacts for communication. The headset may thereby configure the contacts of the LIGHTNING port and LIGHTNING connector that provide electrical power and the contacts that provide communication data.

The headset may also automatically send the configuration information to the mobile device upon determining that the two devices are connected. With the USB Type-C, the headset and the mobile device can determine the orientation of the USB Type-C connectors on the wire as plugged into the headset and the mobile device. The headset and the mobile device can then configure data bus routing and negotiate power requirements and direction. For example, to charge the headset, the power can transfer in the direction from the mobile device to the headset.

By performing the above operations, the headset may receive audio data such as music from the mobile device over the wire connection while charging the battery.

In some embodiments, the headset may send information to software on the mobile device, and the mobile device may respond by displaying the information. For example, the headset may send battery charging information such as the amount of charge left in the headset battery (e.g., this can be the amount of battery charge left in both earbuds for a pair of earbuds). The headset may also send information to the mobile device indicating that the headset is fully charged. The mobile device may display a visual indicator or produce an audible sound when the headset is fully charged.

In some embodiments, the headset may receive data from the mobile device indicating a current charge level of the battery in the mobile device. For example, the headset may receive such data over the wire. In response to determining that the current charge level of the battery in the mobile device is below a predetermined threshold, the headset may perform one or more of the following: enter into an energy conservation mode, display a message indicating that the mobile device is low on battery, and/or display a message indicating that the headset remain connected to the mobile device over the wire to conserve energy.

In response to determining that the current charge level of the battery in the mobile device is above a predetermined threshold, the headset may perform one or more of the following: enter into a normal energy usage (e.g., non-conservation) mode, display a message indicating the current charge level on the mobile device, and/or display a message indicating that the headset can be removed after the headset is fully charged.

In some embodiments, the processor automatically controls the apparatus to power up in response to receiving a signal indicating a new connection to the mobile device is established through the wire. The signal may be received, for example, from the wire connection interface

In some embodiments, the headset may also display on the display panel of the headset a request to the user inquiring whether the user wants to switch to the wire connection before turning off the Bluetooth signal and switching over to wire connection. The headset may receive the user response when the user interacts with a user interface such as pushing on a button or interacting with a touchscreen display on the headset. The headset may also send the user request to the mobile device and the mobile device may perform the same inquiry and send the result to the headset. The headset may display on the display panel a visual indicator such as a message "switching from a wireless connection to a wire connection."

In some embodiments, the processor receives a signal and determines that a new wire connection to a new mobile device is established. In response, the processor may automatically establish a new Bluetooth connection to the new mobile device when receiving a signal indicating that the wire connecting the apparatus with the new mobile device is disconnected. A processor in the headset may receive Bluetooth PIN, address, and/or name identifier information from a mobile device over the wire, and store the information in the memory. In some embodiments, software on the mobile device may provide the information to the Bluetooth device. The processor and Bluetooth module in the headset may use Bluetooth PIN, address, and/or name identifier information to pair with the mobile device.

### Switching From Wire Connection Mode to Wireless Connection Mode

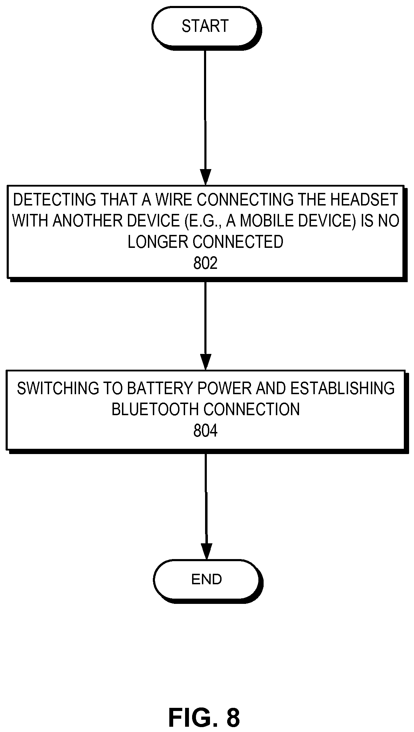

FIG. 8 presents a flowchart illustrating an exemplary process for switching from wire connection mode to wireless connection mode in accordance with an embodiment. The process illustrated in FIG. 8 is one example of the operations that may be performed in an embodiment. Different components may perform the operations in different orders in various embodiments.

As depicted in FIG. 8, the headset may detect that the wire connecting the headset with another device is no longer connected (operation 802). The processor may receive an indication (e.g., signal) that the headset is disconnected from a wire that is previously connected at the other end to a mobile device. For example, the processor may receive an signal from a wire interface connection that the wire is disconnected (e.g., the contacts of the wire are no longer touching the contacts of a port of the headset). The processor may also determine that the wire interface connection no longer receives a signal over the wire.

The headset may then switch to battery power and establish a Bluetooth connection with the mobile device (operation 804). The processor may automatically turn on the Bluetooth signal and establish a Bluetooth connection with the mobile device after determining (e.g., after receiving a signal indicating) that the wire connecting the apparatus with the other device is no longer connected. The other device may be a mobile device or any other device. For example, the other device may be a battery-powered mobile phone.

In some embodiments, the processor controls the apparatus to produce an audible audio signal in response to receiving a signal (for example, from the wire connection interface) indicating that a connection status of the apparatus with the mobile device through the wire changes.

In some embodiments, the mobile device may download and install headset management software on the mobile device. The software on the mobile device may detect that the wire connecting the mobile device with the headset has been disconnected and automatically turn on the Bluetooth on the mobile device. The software may then establish a Bluetooth connection between the mobile device and the headset. The headset may store the Bluetooth identifier and/or address of the mobile device in memory and reestablish the Bluetooth connection using the stored Bluetooth information. The headset may respond to communications from the mobile device. For example, the headset may send data such as identification information and/or address information to the mobile device, which may be in response to a request for the data. The headset may also produce an audible sound and display on the display panel an indicator such as "switching from a wire connection to a wireless connection."

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

Further implementations are disclosed in the following numbered clauses:
1. A method, comprising:
   configuring a headset with a port that allows for electrically and communicatively connecting to a mobile device via a wire plugged into the port;
   configuring the headset to:
      detect the headset being connected to the mobile device through the wire; and
      in response to the detecting, turn off a Bluetooth signal transmitted by the apparatus, charge a battery in the apparatus using power received through an electrical connection of the wire, and establish audio communication with the mobile device through a communication connection of the wire.
2. The method of clause 1, further comprising:
   configuring the headset to automatically turn on the Bluetooth signal and establish a Bluetooth connection with the mobile device upon detecting that the wire connecting the headset with the mobile device is no longer connected.
3. The method of clause 1 or 2, further comprising:
   configuring the headset to produce an audible audio signal in response to detecting that a connection status of the headset with the mobile device through the wire changes.
4. The method of any of clauses 1 to 3, further comprising:
   configuring the headset to set up one or more contacts of the wire connection to establish one or more electrical contacts and audio contacts for communication.
5. The method of any of clauses 1 to 4, further comprising:
   configuring the headset to detect that the audio communication has been successfully configured before turning off the Bluetooth signal.
6. The method of any of clauses 1 to 5, further comprising:
   configuring the headset to power up in response to receiving a signal indicating a new connection to the mobile device is established through the wire.
7. The method of any of clauses 1 to 6, further comprising:
   configuring the headset to detect that a new connection to a new mobile device is established, and in response automatically establish a new Bluetooth connection to the new mobile device when detecting that the wire connecting the headset with the new mobile device is disconnected.
8. The method of any of clauses 1 to 7, further comprising configuring the headset to:
   display a message requesting whether a user wants to switch to a wire connection mode before turning off the Bluetooth signal; and
   receive a user response through user interaction with the headset.
9. The method of any of clauses 1 to 8, further comprising:
   configuring the headset to display on a display panel a visual indicator indicating that the headset is switching from a wireless connection to a wire connection.
10. The method of any of clauses 1 to 9, further comprising:
   configuring the headset to be adapted to receive a connector of a wire that is comprised of swappable portions, wherein the wire facilitates the transfer of power and data.
11. A system configured to perform operations comprising:
   configuring a headset with a port that allows for electrically and communicatively connecting to a mobile device via a wire plugged into the port;
   configuring the headset to:
      detect the headset being connected to the mobile device through the wire; and
      in response to the detecting, turn off a Bluetooth signal transmitted by the apparatus, charge a battery in the apparatus using power received through an electrical connection of the wire, and establish audio communication with the mobile device through a communication connection of the wire.
12. The system of clause 11, the system further configured to perform operations comprising:
   configuring the headset to automatically turn on the Bluetooth signal and establish a Bluetooth connection with the mobile device upon detecting that the wire connecting the headset with the mobile device is no longer connected.
13. A method, comprising:
   configuring a wire with a first end portion of a wire connected at one end of the first end portion via an intermediate connector to a second middle portion of the wire, wherein the first end portion includes a connector at the other end which is pluggable into another device;
   the second middle portion of the wire connected via a second intermediate connector to a device end portion of the wire, with the second middle portion including an integrated circuit or microcontroller to facilitate the transfer of power and data from the first end portion of the wire to the device end portion of the wire; and
   the device end portion of the wire includes a connector that is pluggable into a device, the wire providing at least a connection to transfer power and providing at least a connection to transfer data from the phone to the device.

## Claims

1. A communication apparatus, comprising:
a headset configured with a port that allows for electrically and communicatively connecting to a mobile device via a wire plugged into the port; and
a processor configured within the headset to:
receive a signal indicating the headset being connected to the mobile device through the wire; and
in response to receiving the signal indicating the wire connection, turn off a Bluetooth signal transmitted by the apparatus, charge a battery in the apparatus using power received through an electrical connection of the wire, and establish audio communication with the mobile device through a communication connection of the wire.

2. The apparatus of claim 1, wherein the processor automatically turns on the Bluetooth signal and establishes a Bluetooth connection with the mobile device upon receiving a signal indicating that the wire connecting the apparatus with the mobile device is no longer connected.

3. The apparatus of claim 1 or 2, wherein the processor controls the apparatus to produce an audible audio signal in response to receiving a signal indicating that a connection status of the apparatus with the mobile device through the wire changes.

4. The apparatus of any preceding claim, wherein the apparatus configures the contacts of the wire connection to set one or more electrical contacts and audio contacts for communication.

5. The apparatus of any preceding claim, wherein the processor receives a signal indicating the audio communication has been successfully configured before turning off the Bluetooth signal.

6. The apparatus of any preceding claim, wherein the processor automatically controls the apparatus to power up in response to receiving a signal indicating a new connection to the mobile device is established through the wire.

7. The apparatus of any preceding claim, wherein the processor receives a signal and determines that a new connection to a new mobile device is established, and in response automatically establishes a new Bluetooth connection to the new mobile device when receiving a signal indicating that the wire connecting the apparatus with the new mobile device is disconnected.

8. The apparatus of any preceding claim, wherein the apparatus displays a message requesting whether a user wants to switch to a wire connection mode before turning off the Bluetooth signal and receives a user response through user interaction with the apparatus.

9. The apparatus of any preceding claim, wherein the apparatus displays on a display panel a visual indicator indicating that the apparatus is switching from a wireless connection to a wire connection.

10. The apparatus of any preceding claim, wherein the apparatus is adapted to receive a connector of a wire that is comprised of swappable portions, wherein the wire facilitates the transfer of power and data.

11. A method, comprising:
configuring a headset with a port that allows for electrically and communicatively connecting to a mobile device via a wire plugged into the port;
configuring the headset to:
detect the headset being connected to the mobile device through the wire; and
in response to the detecting, turn off a Bluetooth signal transmitted by the apparatus, charge a battery in the apparatus using power received through an electrical connection of the wire, and establish audio communication with the mobile device through a communication connection of the wire.

12. The method of claim 11, further comprising:
configuring the headset to automatically turn on the Bluetooth signal and establish a Bluetooth connection with the mobile device upon detecting that the wire connecting the headset with the mobile device is no longer connected.

13. The method of claim 11 or 12, further comprising:
configuring the headset to produce an audible audio signal in response to detecting that a connection status of the headset with the mobile device through the wire changes.

14. A system configured to perform operations comprising:
configuring a headset with a port that allows for electrically and communicatively connecting to a mobile device via a wire plugged into the port;
configuring the headset to:
detect the headset being connected to the mobile device through the wire; and
in response to the detecting, turn off a Bluetooth signal transmitted by the apparatus, charge a battery in the apparatus using power received through an electrical connection of the wire, and establish audio communication with the mobile device through a communication connection of the wire.

15. A wire apparatus, comprising:
a first end portion of a wire connected at one end of the first end portion via an intermediate connector to a second middle portion of the wire, wherein the first end portion includes a connector at the other end which is pluggable into another device;
the second middle portion of the wire connected via a second intermediate connector to a device end portion of the wire, with the second middle portion including an integrated circuit or microcontroller to facilitate the transfer of power and data from the first end portion of the wire to the device end portion of the wire; and
the device end portion of the wire includes a connector that is pluggable into a device, the wire providing at least a connection to transfer power and providing at least a connection to transfer data from the phone to the device.
